# EUROPÄISCHE PATENTSCHRIFT

(11) **EP 2 043 783 B1**
(45) Veröffentlichungstag und Bekanntmachung des Hinweises auf die Patenterteilung: **30.09.2020**
(21) Anmeldenummer: 07786203.5
(22) Anmeldetag: 19.07.2007
(51) Int. Cl.: B01J 29/76, B01J 37/08, B01J 37/04, B01J 37/00, B01D 53/86, B01J 29/072, B01J 29/42, B01J 29/06, B01J 29/20, B01J 29/10

(54) **VERFAHREN ZUR HERSTELLUNG METALLDOTIERTER ZEOLITHE UND IHRE VERWENDUNG BEI DER KATALYTISCHEN UMWANDLUNG VON STICKOXIDEN**
METHOD FOR PRODUCING METAL-DOPED ZEOLITES AND USE THEREOF FOR THE CATALYTIC CONVERSION OF NITROGEN OXIDES
PROCÉDÉ DE FABRICATION DE ZÉOLITHES DOPÉS AU MÉTAL ET LEUR UTILISATION LORS DE LA CONVERSION CATALYTIQUE D'OXYDES D'AZOTE

(30) Priorität: 19.07.2006 DE 102006033452
(43) Veröffentlichungstag der Anmeldung: 08.04.2009
(73) Patentinhaber: Süd-Chemie IP GmbH & Co. KG, 81925 München (DE)
(72) Erfinder: HURGOBIN, Soovi, Richards Bay 3900 (ZA); TISSLER, Arno, 93105 Tegernheim (DE); RAGHUNANDAN, Ashveer, Kwa Zulu Natal 4019 (ZA); JAMBOR, Attila, 83209 Prien (DE); RAKOCZY, Rainer, 83024 Rosenheim (DE); ALTHOFF, Roderik, 83024 Rosenheim (DE)
(74) Vertreter: Kuba, Stefan
(86) Internationale Anmeldenummer: PCT/EP2007/006442
(87) Internationale Veröffentlichungsnummer: WO 2008/009453

(56) Entgegenhaltungen:
- EP-A- 0 955 080
- DE-A1- 10 226 461
- RAUSCHER M ET AL: "Preparation of a highly active Fe-ZSM-5 catalyst through solid-state ion exchange for the catalytic decomposition of N2O" APPLIED CATALYSIS A: GENERAL, ELSEVIER SCIENCE, AMSTERDAM, NL, Bd. 184, Nr. 2, 16. August 1999 (1999-08-16), Seiten 249-256, XP004271893 ISSN: 0926-860X
- SOWADE T ET AL: "Relations between structure and catalytic activity of Ce-In-ZSM-5 catalysts for the selective reduction of NO by methane - II. Interplay between the CeO2 promoter and different indium sites" JOURNAL OF CATALYSIS, ACADEMIC PRESS, DULUTH, MN, US, Bd. 225, Nr. 1, 1. Juli 2004 (2004-07-01), Seiten 105-115, XP004511045 ISSN: 0021-9517
- KINGER G ET AL: "Comparison of impregnation, liquid- and solid-state ion exchange procedures for the incorporation of nickel in HMFI, HMOR and HBEA - Activity and selectivity in n-nonane hydroconversion" MICROPOROUS AND MESOPOROUS MATERIALS, ELSEVIER SCIENCE PUBLISHING, NEW YORK, US, Bd. 39, Nr. 1-2, September 2000 (2000-09), Seiten 307-317, XP004215035 ISSN: 1387-1811
- KUCHEROV A V ET AL: "INTRODUCTION OF CR(V), MO(V) AND V(IV) IONS IN CATIONIC POSITIONS OF HIGH-SILICA ZEOLITES BY A SOLID-STATE REACTION" ZEOLITES, BUTTERWORTH-HEINEMANN, US, Bd. 7, Januar 1987 (1987-01), Seiten 38-42, XP000862814 ISSN: 0144-2449

## Beschreibung

Die vorliegende Erfindung betrifft ein Verfahren zur Herstellung metalldotierter Zeolithe sowie deren Verwendung bei der katalytischen Umwandlung insbesondere von Stickoxiden.

Metalldotierte Zeolithe und deren Verwendung, insbesondere bei der katalytischen Umwandlung von Stickoxiden beispielsweise aus Abgasen, sind aus dem Stand der Technik bekannt.

Diese metalldotierten Zeolithe finden dabei insbesondere entweder in Reinform oder als Bestandteile von Beschichtungen auf Katalysatorstrukturen Verwendung als Katalysator für die Reinigung von Abgasen.

Die metalldotierten Zeolithe sind mit mindestens einer metallischen, katalytisch aktiven Komponente dotiert. Typischerweise ist die katalytisch aktive Metallkomponente dabei ein Übergangs- oder Edelmetall, insbesondere ein katalytisch aktives Metall wie Kupfer, Kobalt, Eisen, Rhodium, Platin etc.

So beschreibt die US 5,271,913 einen Katalysator für die Umwandlung von Stickoxiden aus Abgasen, wobei die Stickoxide zu Stickstoff umgewandelt werden.

Dieser Katalysator ist beispielsweise mit Cer oder Eisen dotiert, wobei die katalytische Aktivität außerdem insbesondere durch die Verwendung eines Zeolithen mit einem hohen Siliziumdioxidgehalt, bei denen das molare Verhältnis von SiO₂ zu Al₂O₃ zwanzig oder mehr beträgt, verbessert wird.

Verfahren, um Zeolithe mit Metallen zu dotieren umfassen wie in der US 5,271,913 offenbart, Ionenaustauschverfahren in wässriger Lösung, wie es auch in der US 5,171,553 beschrieben ist. In der letztgenannten Schrift werden als Träger für die aktiven Komponenten siliziumreiche Zeolithe mit Si:Al-Verhältnissen von 5 bis 50 verwendet.

Probleme ergeben sich bei wässrigen Ionenaustauschverfahren vor allem beim Einbringen von katalytisch aktiven Komponenten in die Zeolithe, die, wie beispielsweise Eisen oder Vanadium oder auch Kupfer, verschiedene stabile Oxidationsstufen aufweisen können. Üblicherweise ist nur eine dieser Oxidationsstufen davon eine katalytisch aktive Spezies. Bei einem Ionenaustausch in wässriger Lösung wird oftmals gerade die katalytisch aktive Spezies weiter oxidiert, bis eine thermodynamisch stabilere Oxidationsstufe erhalten wird.

Alternativ zu Ionenaustauschverfahren sind auch Festkörpersyntheseverfahren bekannt:
Aus "Studies in Surface Chemistry and Catalysis", 1994, S. 665-669, S. 43-64 (1991) ist die Dotierung von Zeolithen mit Eisen durch Festkörperionenaustausch bekannt.

Weiter beschreibt der Artikel aus "Journal of Catalysis" 167, S. 256-265 (1997) eisen-, kobalt- und kupferdotierte Zeolithe, die durch Festkörperionenaustausch erhalten wurden. Dabei wurde eine Mischung aus insbesondere der Ammonium- und/oder der H-Form des Zeolithen mit einem Metallsalz durch mechanisches Mischen in einer Kugelmühle bei Raumtemperatur hergestellt. Jedoch weisen die dort offenbarten metalldotierten Zeolithe beim Einsatz als Katalysatoren für die Umwandlung von N₂O in Stickstoff bei Temperaturen von unter 650 K bei Kobalt-, Kupfer- und Eisendotierung nahezu keine Reaktivität auf. Dies ist insbesondere für die simultane Reduktion von Stickoxiden in Abgasen aus industriellen Prozessen, bei Autoabgasen und bei Wirbelschichtbefeuerung von Nachteil, da dort niedrigere Temperaturen als 650 K vorherrschen.

Rauscher M. et al., Applied Catalysis A: General, 184 (1999) 249 - 256 beschreibt eine neue und einfache Herstellungsmethode von Fe-ZSM-5 Pentasil-Zeolithen durch ein Verfahren zum Festkörperionenaustausch. FeSO₄*7H₂O und NH₄-ZSM-5 wurden als Ausgangsmaterialien gewählt, um Produkte (Ammoniumsalze) zu erhalten, die durch Kalzinierung vollständig entfernt werden können. Das vollständige Herstellungsverfahren, das zu der Bildung von katalytisch wirksamem aktiven Eisenspezies im Zeolithen führt, wird in zwei Schritten bei jeweils zwei unterschiedlichen Temperaturen durchgeführt. Auf der Suche nach erhöhter katalytischer Aktivität, wurde der erste Schritt, in welchem der Festkörper-Ionenaustausch stattfindet, durch zwei verschiedene Methoden durchgeführt, in Luft und in Vakuum. Der zweite Schritt muss gezwungenermaßen unter anaeroben Bedingungen durchgeführt werden.

DE10226461A1 offenbart N₂O-Zersetzungskatalysatoren enthaltend Zeolithe, insbesondere Eisen-beladene Zeolithe vom Typ MFI, BEA, FER, MOR, FAU und/oder MEL sowie deren Herstellung mit Bezug auf die zitierte Veröffentlichung von Rauscher et al.

Sowade T. et al., Journal of Catalysis, 225 (2004) 105 - 115 beschreibt Untersuchungen zur Promotierung von In-ZSM-5 Katalysatoren für die selektive katalytische Reduktion von NO durch Methan durch CeO₂ mit mehreren physikalisch-chemischen Methoden (XPS, EXAFS, TPR, XRD, FTIR) und Untersuchungen zur Reaktivität, insbesondere nach verschiedenen Aktivierungsbedingungen. CeO₂ ist für In-ZSM-5 bei einem trockenen Eduktgas (zum Beispiel X (NO) größer 70 % bei 100.000 h⁻¹ zwischen 723 und 773° K mit 1000 ppm NO, 1000 ppm CH₄ und 2 % O₂) ein hocheffektiver Promotor, während in einem feuchten Eduktgas der Promotionseffekt nur bei hohen Temperaturen ausgeprägt ist.

Kinger G. et al., Microporous and Mesoporous Materials 39 (2000) 307 - 317, beschreibt die Herstellung von Nickel-enthaltenden HMFI-, HMOR- und HBEA-Zeolithen durch Imprägnation, Flüssigphasen- und Festkörper-Ionenaustausch. Die Kinetik des Festkörperionenaustausches der Protonen (Broensted-Säurezentren) mit NiCl₂ wurde durch IR- und TPD-Messungen gemessen. Die Ergebnisse wurden mit den Katalysatoren, die durch Flüssigphasen-Ionenaustausch und durch Incipient-Wetness-Imprägnation hergestellt wurden, verglichen. Der Austauschgrad erreichte 100 % im Fall des Festkörper-Verfahrens, während der Austauschgrad im Fall des Flüssigphasen-Austauschs begrenzt war. Der Austauschgrad erhöhte sich in der Reihenfolge BEA < MFI < MOR. Die auf unterschiedliche Weise hergestellten Nickel enthaltenden Zeolithe zeigten eine vergleichbare Aktivität und Selektivität bei der Hydrokonversion von n-Nonan, wobei Ni/MFI der aktivste und Ni/HBEA der selektive Katalysator war.

Kucheruv A. V. et al., Butterworth-Heinemann, US, Bd. 7, Januar 1982 (1907 80-01), p. 38 - 42, ISSN: 0144-2449, offenbart die Kalzinierung von H-Mordenit oder H-ZSM-5 mit einigen Cr(III), Mo(V), und V(IV)-Verbindungen die mit der Migration der Metallionen in die Zeolithkanäle begleitet ist. Die Ionen, die von der äußeren Oberfläche der Zeolithkristalle aus migrieren, werden an den Positionen der Zeolith-Kationen koordiniert. Die meisten der migrierten Ionen befinden sich, zugänglich für Moleküle in der Gasphase, in den H-ZSM-5 Kanälen als isolierte Kationen (Cr(V), Mo(V) und V(IV). Die Zugänglichkeit der Kationen wird durch den starken Einfluss bei der O₂-Adsorption auf die Hyperfeinstruktur der ESR-Spektren von Cr(V), Mo(V) und V(IV) bestätigt. Die Möglichkeit der Einfügung von Kationen in Zeolithen mit hohem Silikat-Anteil durch Festkörperreaktionen wird durch die Anwesenheit von Säurezentren bestimmt, die als starke Fallen für die wiederkehrenden Ionen angesehen werden können. Die Wechselwirkung der Festkörper bei Temperaturen oberhalb vom 820 °C erlaubt nicht den Austausch von Na⁺-Kationen durch polyvalente Kationen.

Ein weiterer Nachteil der bislang bekannten metalldotierten Zeolithe als Katalysatoren ist insbesondere deren verminderte Langzeitstabilität, insbesondere im Hinblick auf die wasserdampf- und schwefeldioxidhaltige Umgebung, insbesondere in Autoabgasen.

Diese Bedingungen werden üblicherweise auch als "hydrothermale Bedingungen" bezeichnet.

Bisher ist bekannt, dass metallisch dotierten Zeolithen eine Langzeitstabilität verliehen werden kann, wenn der metalldotierte Zeolith unter anaeroben Bedingungen hergestellt wird, so dass die Oxidation von Fe²⁺ Kationen in wässrigem Medium zu Fe³⁺ und die gleichzeitige Ausfällung von Eisenhydroxiden möglichst lange verzögert werden kann.

Die EP 0 955 080 B1 schlägt dafür vor, dass zur Erhöhung der Langzeitstabilität metalldotierter Zeolithe, die Dotierung im Rahmen einer Festkörperionenaustauschreaktion unter Schutzgasatmosphäre, insbesondere einer reduktiven Schutzgasatmosphäre beispielsweise unter Ammoniak bzw. Stickstoff, erfolgt, so dass durch die anaeroben Bedingungen bei der Kalzination ein relativ langzeitstabiler metalldotierter Zeolith als Katalysator erhalten werden kann.

Ein Metall, das aufgrund seiner Reduktionseigenschaften und seiner Schwefelbeständigkeit, aber auch aufgrund seiner gesundheitlichen Unbedenklichkeit bevorzugt als Dotierungsmaterial eingesetzt wird, ist Eisen.

Wie schon vorstehend allgemein ausgeführt, ist eine Modifikation von Zeolithen gerade mit Eisen aber mit Problemen verbunden, da insbesondere Eisensalze größere Hydrathüllen aufbauen, die eine Wanderung der Eisenspezies in die Zeolithporen erschwert oder gar verhindert.

Das aus der EP 0 955 080 B1 bekannte Verfahren führt nachteiligerweise zu ungleichmäßigen Metall- bzw. Eisendotierungen und durch die hohen Temperaturen oftmals zu einer Oxidation des eingesetzten Fe²⁺ zu inaktivem Fe³⁺. Bei der Kalzinierung unter den hohen Temperaturen, wie sie in der EP 0 955 080 B1 offenbart sind, kann das Zeolithgitter ebenfalls durch die reaktive Atmosphäre aus entstehendem NH₃ und HCl geschädigt werden.

Aufgabe der vorliegenden Erfindung war es daher, ein Verfahren bereitzustellen, das eine gleichmäßige Dotierung eines Zeolithen vom Typ BETA mit Metallen ohne eine damit verbundene Schädigung des Zeolithgitters sowie eine prozesstechnische Vereinfachung gegenüber den aus dem Stand der Technik bekannten Verfahren ermöglicht.

Erfindungsgemäß wird diese Aufgabe dadurch gelöst, dass das Verfahren zur Herstellung des metalldotierten Zeolithen die folgenden Schritte umfasst:
i) des Bereitstellens einer trockenen Mischung aus
   a) einem Zeolithen,
   b) einer Verbindung eines katalytisch aktiven Metalls,
ii) des innigen Vermahlens der Mischung,
iii) des Aufheizens der Mischung in einem Reaktor, wobei die Aufheizdauer 60 min bis 5 h beträgt, auf eine definierte Temperatur zwischen 300 °C bis 800 °C, die für 8 bis 20 h beibehalten wird,
iv) des Haltens der Mischung auf der definierten Temperatur
v) des Abkühlens auf Raumtemperatur und Gewinnung des metalldotierten Zeolithen,
wobei während des Aufheizens der Innendruck im Reaktor in einem Unterdruckbereich von -10 bis -100 Millibar gehalten wird, wobei ein Zeolith vom Typ BETA eingesetzt wird, und wobei das katalytisch aktive Metall ausgewählt ist aus der Gruppe bestehend aus Cu, Co, Rh, Pd, Ir, Pt, Ru und Fe.

"Innendruck" wird also vorliegend im Sinne eines schwachen Vakuums im "Unterdruck"-Bereich von -10 bis -100 Millibar verstanden.

Überraschenderweise wurde daher gefunden, dass eine relativ schnelle Aufheizung des Reaktors bei einem leichten Unterdruck einen metalldotierten Zeolithen ergibt, der bei Verwendung als Katalysator eine erhöhte Aktivität und Langzeitstabilität aufweist. Der Unterdruck wird vorzugsweise auch während des gesamten weiteren, nachstehend beschriebenen Kalzinierprozesses beibehalten.

Es wurde gefunden, dass ein leichter Unterdruck bzw. Vakuum von -10 bis -50 Millibar während des Aufheizens sowie auch während der nachfolgenden Festkörperreaktion (Schritt iv), Kalzinierung) besonders bevorzugt ist.

Es konnten Aktivitätssteigerungen mit einem nach dem erfindungsgemäßen Verfahren hergestellten metalldotierten Zeolithen BETA bei der Umsetzung von Stickoxiden verglichen mit entsprechenden metalldotierten Zeolithen, die bei Normaldruck gemäß der EP 0 955 080 B1 hergestellt wurden, von 20 bis 50% erzielt werden.

Überraschenderweise konnte ebenfalls auf die Zufuhr einer separaten Schutzgasatmosphäre gemäß des vorstehend zitierten Europäischen Patents verzichtet werden, ohne dass eine Verminderung der Zahl katalytisch aktiver Fe²⁺ Zentren zu beobachten war.

Bevorzugt ist das Metall bezogen auf den Zeolith gerechnet als Metalloxid in einer Menge von 0,5 bis 20 Gew.-% enthalten.

Im Kalzinierofen entsteht durch die Abspaltung von Gasen wie HCl, NH₃ und Wasser während der Festkörperreaktion ein Überdruck im Ofen, der durch das Anlegen eines Unterdrucks bzw. Vakuums konstant ausgeglichen wird, um zu dem erfindungsgemäßen Unterdruckbereich zu gelangen.

Die Dotierung des Zeolithen findet dabei bevorzugt in einem so genannten Tiefbett statt, d.h. der Zeolith wird in Pulverform in einen Reaktor eingebracht, wobei das Tiefbett des Pulvers typischerweise eine Dicke von 5 bis 50 cm, bevorzugt 10 bis 20 cm aufweist.

Während des erfindungsgemäßen Verfahrens wird der Innendruck des Reaktors im Bereich eines schwachen Vakuums gehalten, d.h. im Bereich von -10 bis -100, bevorzugt im Bereich von -10 bis -50 Millibar, wodurch ein metalldotierter Zeolith entsteht, der besonders reaktiv und langzeitstabil ist.

Das katalytisch aktive Metall ist ausgewählt aus der Gruppe bestehend aus Cu, Co, Rh, Pd, Ir, Pt, Ru, Fe. Das katalytisch aktive Metall wird dabei in Form eines Salzes, z.B. eines Nitrats, Sulfats, Sulfits, Hydroxids, Nitrits, etc. oder in Form einer Komplexverbindung eingesetzt.

In Schritt i) wird in bevorzugten Weiterbildungen des erfindungsgemäßen Verfahrens eine stickstoffhaltige Verbindung ausgewählt aus einem Ammoniumsalz, Harnstoff oder ein Harnstoff-derivat zugegeben wird. Unter "Harnstoff-Derivat" werden vorliegend sogenannte Harnstoff-Prills oder -Granulate (z.B. erhältlich bei den Firmen SKW oder Jara) verstanden, die nicht in kristalliner Form vorliegen.

Durch den optionalen Einsatz einer festen stickstoffhaltigen Verbindung, insbesondere einem Ammoniumsalz oder einem festen Harnstoff bzw. Harnstoffderivat, wird bei Kalzination automatisch eine stickstoff- bzw. ammoniakhaltige Atmosphäre geschaffen, die jedoch durch den dauerhaft angelegten Unterdruck nicht so starke Konzentrationen an Ammoniak aufweist, dass es zur Schädigung des Zeolithgitters kommt.

In Schritt iii) wird die Mischung auf eine Temperatur zwischen 300 °C bis 800 °C, bevorzugt 400 °C bis 600 °C aufgeheizt. Das heißt es werden verglichen mit herkömmlichen Festkörperverfahren relativ milde Bedingungen eingesetzt, sodass eine thermische Schädigung des Zeolithen ebenfalls vermieden wird.

Die Aufheizdauer während des erfindungsgemäßen Verfahrens beträgt 60 min bis 5 h im Gegensatz zu den längeren Aufheizschritten in dem Verfahren des Stands der Technik.

Die Temperatur wird für 8 bis 20 h, bevorzugt 10 bis 16 h beibehalten, damit die Festkörperreaktion ("Kalzinierung") zwischen den Bestandteilen der trockenen Mischung vollständig verläuft.

Das katalytisch aktive Metall in Form seiner Metallverbindung wird in einer Menge von 0,5 bis 10 Gew.-% bezogen auf die gesamte trockene Mischung zugegeben.

Als Zeolith wird bevorzugt ein siliziumreicher Zeolith vom Typ BETA eingesetzt, der ein Verhältnis von SiO₂ : Al₂O₃ von >2,5 bevorzugt >10 aufweist.

Der Zeolith liegt dabei ganz oder teilweise in seiner Ammoniumform vor, sodass bei Erhitzen automatisch Ammoniak freigesetzt wird.

Der metalldotierte Zeolith, der durch das erfindungsgemäße Verfahren erhalten wird, findet insbesondere Verwendung für die katalytische Umwandlung von NOₓ und N₂O, insbesondere in Autoabgasen, da er besonders langzeitstabil ist und äußerst reaktiv ist. Natürlich ist er ganz allgemein zur Entfernung von NOx und N₂O, beispielsweise herrührend aus großtechnischen Prozessen, insbesondere bei der Herstellung von Salpetersäure und Adipinsäure geeignet.

Die Erfindung wird nachfolgend anhand eines Ausführungsbeispiels, das nicht als einschränkend verstanden werden soll, näher beschrieben:

### Ausführungsbeispiel 1

Ein mit 5 g Ammonium-Zeolith BETA mit einem SiO₂/Al₂O₃-Verhältnis von 40 wurde in einer Kugelmühle mit 0,9 g FeSO₄ * 7 H₂O (Merck) (berechnet 5 Gew.-% Fe₂O₃) für eine Stunde bei Raumtemperatur gemischt. Anschließend wurde ein Tiefbett bestehend aus der Mischung von 10 cm Höhe in einem Kalzinierofen eingesetzt.

Anschließend wurde der Kalzinierofen während 90 min von Raumtemperatur auf 500 °C aufgeheizt. Der Innendruck des Ofens wurde dabei auf -20 Millibar gehalten.

Die Temperatur von 500 °C und der Unterdruck wurden für 12 Stunden beibehalten und anschließend wurde der Kalzinierofen auf Raumtemperatur abgekühlt und der mit Eisen dotierte Zeolith mit Wasser gewaschen und getrocknet.

Anschließend wurde das Pulver mit einem Binder (Pseudoböhmit) in üblicher Weise zu Katalysatorformkörpern verarbeitet.

### Ausführungsbeispiel 2

Mehrere analog zu Ausführungsbeispiel 1 erhaltene Katalysatoren wurden bei der katalytischen Reduzierung von Lachgas mit Methan als Reduktionsmittel getestet. Die Katalysatoren wurden dabei bei unterschiedlichen Unterdrücken im Ofen hergestellt, um den Einfluss des angelegten Unterdrucks zu bestimmen.

Die Vergleichsversuche wurden bei 360 °C und einem GHSV von 10.000 h⁻¹ sowie mit einem Verhältnis von CH₄/N₂O von 0,25 durchgeführt.

Gemessen wurde der Umsatz von N₂O zu N₂ gegen den Kalzinierdruck des aktiven Pulvers.

**Tabelle 1**

| **Kalzinierdruck bzw. Vakuum bei der Herstellung des Katalysators (in mbar)** | +10 | ±0 | -10 | -20 | -50 | -100 |
|---|---|---|---|---|---|---|
| **Umsatz N₂O** | 60% | 72% | 96% | 97% | 90% | 85% |

Wie aus Tabelle 1 ersichtlich ist, wird ein Optimum für den Druck während der Kalzinierung von zwischen 0 mbar und -100, besonders bevorzugt von -10 bis -50 mbar, ganz besonders bevorzugt von -10 bis -20 mbar, erhalten.

Weiterhin ist aus Tabelle 1 ersichtlich, dass der Umsatz von ca. 60 % bei einem Druck von +10 mbar, auf 97 % für einen bei einem Unterdruck bzw. Vakuum -20 mbar kalzinierten Katalysator ansteigt.

Der Unterschied in der intrinsischen Aktivität bei dieser katalytischen Reaktion liegt bei einem Faktor von ca. 2, d.h. die einzusetzende Katalysatormenge kann damit halbiert werden, wenn ein mittels des erfindungsgemäß erhaltenen Verfahrens hergestellter Katalysator verglichen mit einem herkömmlich hergestellten (EP 0 955 080 B1) verwendet wird.

## Patentansprüche

1. Verfahren zur Herstellung metalldotierter Zeolithe umfassend die Schritte des
i) Bereitstellens einer trockenen Mischung aus
a) einem Zeolithen,
b) einer Verbindung eines katalytisch aktiven Metalls,
ii) innigen Vermahlens der Mischung,
iii) Aufheizens der Mischung in einem Reaktor, wobei die Aufheizdauer 60 min bis 5 h beträgt, auf eine definierte Temperatur zwischen 300 °C bis 800 °C, die für 8 bis 20 h beibehalten wird,
iv) Haltens der Mischung auf der definierten Temperatur, und
v) Abkühlens auf Raumtemperatur und Gewinnung des metalldotierten Zeolithen,
**dadurch gekennzeichnet, dass** während des Aufheizens der Innendruck des Reaktors in einem Unterdruckbereich von - 10 bis -100 Millibar gehalten wird, so dass immer ein leichtes Vakuum im Innern des Reaktors herrscht;
wobei ein Zeolith vom Typ BETA eingesetzt wird, und wobei das katalytisch aktive Metall ausgewählt ist aus der Gruppe bestehend aus Cu, Co, Rh, Pd, Ir, Pt, Ru und Fe.

2. Verfahren nach Anspruch 1, **dadurch gekennzeichnet, dass** der Innendruck des Reaktors in einem Unterdruckbereich von -10 bis -50 Millibar gehalten wird.

3. Verfahren nach einem der vorhergehenden Ansprüche, **dadurch gekennzeichnet, dass** in Schritt i) eine stickstoffhaltige Verbindung ausgewählt aus einem Ammoniumsalz, festem Harnstoff oder einem festen Harnstoffderivat zugegeben wird.

4. Verfahren nach einem der vorhergehenden Ansprüche, **dadurch gekennzeichnet, dass** in Schritt iii) die Mischung auf eine Temperatur zwischen 400 °C bis 600 °C aufgeheizt wird.

5. Verfahren nach Anspruch 4, **dadurch gekennzeichnet, dass** die Temperatur für 10 bis 16 h beibehalten wird.

## Claims

1. Process for producing metal-doped zeolites, which comprises the steps of
i) provision of a dry mixture of
a) a zeolite,
b) a compound of a catalytically active metal,
ii) intimate milling of the mixture,
iii) heating of the mixture in a reactor, where the duration of heating is from 60 min to 5 h, to a defined temperature in the range from 300°C to 800°C which is maintained for from 8 to 20 hours,
iv) holding of the mixture at the defined temperature and
v) cooling to room temperature and isolation of the metal-doped zeolite,
**characterized in that** the internal pressure in the reactor is kept in a subatmospheric pressure range from -10 to -100 millibar, so that a slight vacuum always prevails in the interior of the reactor;
where a zeolite of the BETA type is used and the catalytically active metal is selected from the group consisting of Cu, Co, Rh, Pd, Ir, Pt, Ru and Fe.

2. Process according to Claim 1, **characterized in that** the internal pressure in the reactor is kept in a subatmospheric pressure range from -10 to -50 millibar.

3. Process according to either of the preceding claims, **characterized in that** a nitrogen-containing compound selected from among an ammonium salt, solid urea or a solid urea derivative is added in step i).

4. Process according to any of the preceding claims, **characterized in that** the mixture is heated to a temperature in the range from 400°C to 600°C in step iii).

5. Process according to Claim 4, **characterized in that** the temperature is maintained for from 10 to 16 hours.

## Revendications

1. Procédé pour la préparation de zéolithes dopées par un métal, comprenant les étapes de
i) préparation d'un mélange sec à partir de
a) une zéolithe,
b) un composé d'un métal catalytiquement actif,
ii) broyage intime du mélange,
iii) chauffage du mélange dans un réacteur, la durée de chauffage étant de 60 min à 5 h à une température définie entre 300°C et 800°C qui est maintenue pendant 8 à 20 h,
iv) maintien du mélange à la température définie et
v) refroidissement à température ambiante et obtention de la zéolithe dopée par un métal,
**caractérisé en ce que**, pendant le chauffage, la pression interne du réacteur est maintenue dans une plage de dépression de -10 à -100 millibars de telle sorte qu'un léger vide règne toujours à l'intérieur du réacteur ;
une zéolithe du type BETA étant utilisée et le métal catalytiquement actif étant choisi dans le groupe constitué par Cu, Co, Rh, Pd, Ir, Pt, Ru et Fe.

2. Procédé selon la revendication 1, **caractérisé en ce que** la pression interne du réacteur est maintenue dans une plage de dépression de -10 à -50 millibars.

3. Procédé selon l'une quelconque des revendications précédentes, **caractérisé en ce que**, dans l'étape i), un composé contenant de l'azote, choisi parmi un sel d'ammonium, l'urée solide ou un dérivé solide d'urée, est ajouté.

4. Procédé selon l'une quelconque des revendications précédentes, **caractérisé en ce que**, dans l'étape iii), le mélange est chauffé à une température entre 400°C et 600°C.

5. Procédé selon la revendication 4, **caractérisé en ce que** la température est maintenue pendant 10 à 16 h.
